# EUROPÄISCHE PATENTSCHRIFT

(11) **EP 3 036 084 B1**
(45) Veröffentlichungstag und Bekanntmachung des Hinweises auf die Patenterteilung: **08.04.2020**
(21) Anmeldenummer: 14741545.9
(22) Anmeldetag: 11.07.2014
(51) Int. Cl.: B29C 57/00, A61C 13/00

(54) **VERFAHREN ZUR HERSTELLUNG VON FORMKÖRPERN**
METHOD FOR PRODUCING SHAPED PRODUCTS
PROCÉDÉ DE RÉALISATION DE CORPS FAÇONNÉS

(30) Priorität: 23.08.2013 DE 102013216855
(43) Veröffentlichungstag der Anmeldung: 29.06.2016
(73) Patentinhaber: Mühlbauer Technology GmbH, 22547 Hamburg (DE)
(72) Erfinder: HEYMANN, Rudolf, 21502 Geesthacht (DE)
(74) Vertreter: Glawe, Delfs, Moll
(86) Internationale Anmeldenummer: PCT/EP2014/064963
(87) Internationale Veröffentlichungsnummer: WO 2015/024705

(56) Entgegenhaltungen:
- EP-A1- 2 191 956
- EP-A1- 2 277 632
- WO-A1-2005/084611
- WO-A1-2013/064826
- DE-A1-102011 117 005

## Beschreibung

Die Erfindung betrifft ein Verfahren zur Herstellung eines Formkörpers aus einem strukturviskosen Material mittels einer Ausbringeinrichtung für das strukturviskose Material.

Dentale Restaurationen werden überwiegend durch klassische Abform- und Gießverfahren hergestellt. Ebenfalls bekannt ist es, die zu restaurierende intraorale Situation computergestützt abzutasten und auf Basis der so gewonnenen Daten computergestützt eine dentale Restauration herzustellen (CAD/CAM-Verfahren).

CAD/CAM-Verfahren zur Herstellung von festsitzendem Zahnersatz sind insbesondere für keramische Materialien bekannt. Haupteinsatzgebiet ist die Herstellung von vollkeramischem Zahnersatz, z.B. durch abtragende Verfahren, wie Fräsen eines Zahnersatzteils aus einem Keramikrohling. Nachteilig hierbei ist die aufwendige Herstellung der Rohlinge, die starke Abnutzung der Fräsen beim Schleifen keramischer Rohlinge oder die begrenzten Möglichkeiten hinsichtlich der Farbgestaltung und Oberflächenbeschaffenheit. Dies gilt insbesondere auch für nichtkeramische Rohlinge, beispielsweise aus gehärteten dentalen Kunststoffkompositen.

CAD/CAM-Systeme bestehen im Wesentlichen aus 4 Komponenten: einem Scanner, welcher einen vorliegenden Zustand abtastet und die Daten digitalisiert, wobei das Scannen im Mund direkt (intraoral) oder an einem angefertigten Modell der vorliegenden Situation erfolgt; einer CAD-Einheit, bestehend aus Computer und Software, einer CAM-Einheit mit computergesteuerten Maschinen, die entweder Material abtragen, z.B. mittels Fräsen oder Material auftragen, z.B. punkt-, strang- und schichtweise durch eine Düse; und einem geeigneten Werkstoff.

Bekannt sind additive oder generative Herstellungsverfahren, bei denen durch 3D-Druck beispielsweise temporäre Kronen sukzessive aufgebaut werden (EP 1 240 878 B1 und EP 1 243 231 B1).

Eine besondere Herausforderung stellt das sogenannte Chairside-Konzept dar, bei dem das Scannen, das Bearbeiten der Daten mittels einer Software und die anschließende automatisierte Herstellung des Zahnersatzes ausschließlich in der zahnärztlichen Praxis erfolgt, so dass der Patient direkt in einer Sitzung versorgt werden kann. Da insbesondere nichtkeramische festsitzende zahnärztliche Versorgungen jedoch auch weiterhin in zahntechnischen Laboratorien gefertigt werden, besteht auch ein hoher Bedarf an der automatisierten Herstellung von provisorischen Versorgungen, insbesondere provisorischen Kronen oder Brücken.

Bisher ist es nicht möglich z.B. zahnärztliche Kunststoffkomposite des Standes der Technik, z.B. für Provisorien mittels generativer CAD/CAM-Verfahren in praxistauglicher Geschwindigkeit und/oder in der erforderlichen oder gar gewünschten Qualität herzustellen.

Beispiele für zahnärztliche Kunststoffkomposite des Standes der Technik sind in WO 2005/084611 und WO 2011/083020 genannt.

DE 10 2011 117005 A1 offenbart ein Verfahren zur Herstellung eines keramischen Formkörpers, bei dem eine Suspension aus einer Pulverzusammensetzung durch wiederholtes/ lagenweises Abscheiden einzelner Schlickerschichten und Verfestigen von Schlickerschichtbereichen zum Aufbau des keramischen Formkörpers verwendet wird, wobei wenigstens zwei sich in Art und/oder Konzentration der Pulverzusammensetzung voneinander unterscheidende Schlicker vorgesehen sind und zusätzlich die Schichtoberfläche ortsselektiv wenigstens mit einer Tintenflüssiqkeit beaufschlagt wird.

Der Erfindung liegt die Aufgabe zu Grunde, ein Verfahren der eingangs genannten Art zu schaffen, mittels dem sich eine Vielzahl von beispielsweise im Dentalbereich eingesetzten viskosen und/oder hochviskosen Materialien zu Formkörpern verarbeiten lassen, die einer Vielzahl von Anforderungen, insbesondere an die Biege- und Bruchfestigkeit genügen.

Gelöst wird diese Aufgabe durch ein eingangs genanntes Verfahren mit den folgenden Merkmalen:
a) Aufbringen einer Materialschicht auf einen Trägerkörper und/oder ein bereits aufgebrachte Materialschicht durch Führen der Ausbringeinrichtung über diesen Trägerkörper,
b) Beaufschlagen dieser aufgebrachten Materialschicht mit Ultraschall,
c) Wiederholung der Schritte a) und b) zur Herstellung des gewünschten Formkörpers,
d) Aushärten des aufgebrachten Materials.

Zunächst seien einige im Rahmen der Erfindung verwendete Begriffe erläutert. Das erfindungsgemäße Verfahren dient der Herstellung von Formkörpern. Es handelt sich um dreidimensionale harte oder (formstabile) härtbare Festkörper, die eine (in der Regel EDV-gestützt errechnete) vorgegebene Form haben.

Die Formkörper werden aus einem strukturviskosen Material hergestellt. Strukturviskos bedeutet, dass das Material als Fluid bei zunehmenden Scherkräften eine abnehmende Viskosität zeigt. Strukturviskosität liegt stets bei Dispersionen, wie bspw. Dentalkompositen vor, welche in der Regel Dispersionen von feinteiligem anorganischem Füllstoff in einer polymerisierbaren Mono- bzw. Oligomermischung, auch Harzmatrix genannt, sind.

Als Trägerkörper kann erfindungsgemäß eine plane Fläche (Platte) oder dergleichen verwendet werden, bevorzugt wird jedoch die Verwendung eines Trägerkörpers, der eine stützende Funktion ausübt oder die Innenkontur eines aufzubauenden Formkörpers aufweist. Soll beispielsweise eine Krone hergestellt werden, wird als Trägerkörper bevorzugt ein genaues Modell bzw. Abbild des zu überkronenden Zahnstumpfes verwendet. Soll beispielsweise eine Verblendung hergestellt werden, wird als Trägerkörper bevorzugt der zu verblendenden Formkörper selbst, bspw. eine Metallkrone, verwendet. Die Ausbringeinrichtung bzw. Düse und Trägerkörper sind vorzugsweise mittels einer 5-achsigen Auftragsvorrichtung relativ zueinander beweglich angeordnet, so dass die Düse relativ zum Trägerkörper jedwede Bewegung durchführen und komplizierte Konturen abfahren kann.

Das Aufbringen einer Materialschicht kann erfindungsgemäß bevorzugt Strang- oder Tropfenweise erfolgen. Die Erfindung erlaubt es somit, einen additiven Aufbau von Formkörpern (3D-Druck) aus pastösen, strukturviskosen Materialien durchzuführen, die bisher für den 3D-Druck nicht oder nur unter großen Einschränkungen verwendet werden konnten. Der 3D-Druck zur Herstellung eines Formkörpers kann erfindungsgemäß durch Strangablage (analog Fused Deposition Modeling (FDM)) oder durch tropfenweises Aufbringen (bspw. Multi Jet Modeling (MJM)) erfolgen.

Die Schichtdicke beim Auftragen wird bestimmt durch den Abstand zwischen der Düsenspitze und der Oberfläche, auf die aufgetragen wird. Ein weiteres bestimmendes Element der Schichtdicke insbesondere beim Auftragen eines Stranges ist die Strangdicke, die wiederum maßgeblich durch den Durchmesser der Düsenöffnung bestimmt wird.

Bevorzugt hat eine aufgetragene Schicht oder ein aufgetragener Materialstrang /-tropfen eine Dicke, die geringer als die Eindringtiefe des Ultraschalls ist.

Das Aushärten gemäß Schritt d) kann auf eine dem Fachmann geläufige Art und Weise erfolgen, bevorzugt ist Verwendung lichthärtender Materialien und dementsprechend eine Polymerisation durch Einwirkung von Licht des Absorptionsspektrums von im Material enthalten Fotoinitiatoren. Im Zuge der Herstellung eines Formkörpers kann das Aushärten mehrfach durchgeführt werden, beispielsweise jeweils nach dem Auftragen einer gewissen Materialmenge, beispielsweise jeder Materialschicht, jedes Materialstrangs oder dergleichen. Wie unten noch näher erläutert werden wird, ist es jedoch ein besonderer Vorteil des erfindungsgemäßen Verfahrens, dass der hergestellte Formkörper nicht notwendigerweise schichtweise gehärtet werden muss, sondern die Härtung einer Mehrzahl von Schichten, besonders bevorzugt aller Schichten des Formkörpers gemeinsam erfolgen kann.

Ein Kern des erfindungsgemäßen Verfahrens ist es, dass bereits aufgetragenes bzw. aufgebrachtes Material mit Ultraschall beaufschlagt wird.

Die Erfindung hat erkannt, dass beim sukzessiven Auftrag von Tropfen oder Strängen strukturviskoser Materialien das Problem auftreten kann, dass diese an den Berührungsflächen nicht hinreichend ineinander fließen, so dass nach dem Aushärten dort Schwachstellen entstehen können. Die erfindungsgemäß vorgesehene Beaufschlagung mit Ultraschall sorgt dafür, dass eine zuletzt aufgebrachte Materialschicht (beispielsweise Strang oder Tropfen) mit der darunter liegenden Materialschicht und/oder mit benachbart aufgebrachten Tropfen oder Strängen besser zusammenfließt, somit eine innigere Verbindung eingeht und nach dem Aushärten einen festeren Verbund bildet.

Das erfindungsgemäße Verfahren erlaubt es, den Aufbau des Formkörpers aus einzelnen Tropfen, Strängen oder Schichten unter Verwendung eines strukturviskosen Materials durchzuführen, das während des Formungsprozesses (ohne die Einwirkung von Ultraschall) im Wesentlichen standfest ist, also auch vor der Aushärtung nicht oder nur in unerheblichem Umfang fließt oder sich verformt, d.h. dass mindestens eine Materialschicht zumindest während des Zeitraums des Formungsprozesses bei Umgebungsbedingungen (23° C, Normaldruck) formstabil ist (Dimensionsänderung < 5 pm). Bei der Verwendung eines solchen Materials mit hoher Standfestigkeit kann das Problem auftreten, dass sich einzelne Tropfen, Stränge oder Schichten nicht hinreichend miteinander verbinden. Dieses Problem wird durch die erfindungsgemäß vorgesehene Beaufschlagung mit Ultraschall gelöst. Die durch das erfindungsgemäße Verfahren mögliche Verwendung von vergleichsweise standfesten strukturviskosen Materialien ermöglicht es, dass ein gebildeter Formkörper nicht schichtweise gehärtet werden muss (um ein Zerfließen zu vermeiden), sondern die Härtung einer Mehrzahl von Schichten, Strängen oder Tropfen, bevorzugt aller Schichten des fertigen Formkörpers kann gemeinsam erfolgen. Die Erfindung ermöglicht es ebenfalls, den Schichtaufbau nicht plan durchzuführen, da erfindungsgemäß auch auf geneigten Flächen angebrachte Materialschichten hinreichend formstabil sind und nicht wegfließen.

Gemäß einem weiteren Aspekt des erfindungsgemäßen Verfahrens kann das Beaufschlagen mit Ultraschall auch zum Glätten oder Nachmodellieren bereits aufgebrachter, aber noch nicht ausgehärteter Materialschichten verwendet werden.

Gemäß einer Variante der Erfindung kann die Beaufschlagung der aufgebrachten Materialschicht mit Ultraschall mit einer an der Ausbringeinrichtung angebrachten Ultraschalleinrichtung erfolgen. Das Auftragen einer neuen Materialschicht erfolgt dann zeitgleich mit der Beaufschlagung mit Ultraschall. Bei dieser Variante des erfindungsgemäßen Verfahrens kann beispielsweise eine unten im Zusammenhang mit dem Ausführungsbeispiel beschriebene Düse mit einer Ultraschalleinrichtung verwendet werden, die als Durchflussschalter zum Ein- und Ausschalten des Materialflusses ansteuerbar ist. Diese Ultraschalleinrichtung kann dann eine Doppelfunktion haben und gleichzeitig die aufgebrachte Materialschicht mit Ultraschall beaufschlagen. Im Rahmen der Erfindung ist es ebenfalls möglich, die Ausbringeinrichtung mit einer Ultraschalleinrichtung zu versehen, die ausschließlich die Funktion hat, eine bereits aufgebrachte Materialschicht mit Ultraschall zu beaufschlagen.

Gemäß einer alternativen Variante der Erfindung kann vorgesehen sein, dass die Beaufschlagung der aufgebrachten Materialschicht mit Ultraschall mit einer von der Ausbringeinrichtung getrennten, separaten Ultraschalleinrichtung erfolgt. Diese Variante kann insbesondere dann von Vorteil sein, wenn beispielsweise nachträglich noch ein Glätten oder Nachmodellieren einer bereits aufgebrachten Materialschicht erfolgen soll. Es kann dann beispielsweise eine separate Ultraschallspitze verwendet werden.

Die Vorschubgeschwindigkeit der Ausbringeinrichtung bzw. Düse beim Auftragen kann erfindungsgemäß beispielsweise zwischen 5 und 10 mm/s liegen. Sofern eine von der Düse getrennte Ultraschalleinrichtung verwendet wird, kann deren Vorschubgeschwindigkeit gegebenenfalls höher liegen.

Die Erfindung ermöglicht es, bestehende additive beziehungsweise generative CAD/CAM-Systeme so zu verändern, dass die Verarbeitung hochviskoser Kunststoffkomposite verbessert wird. Die Chairside-Herstellung von Zahnersatz mit guter Biegefestigkeit, Röntgenopazität, Druckfestigkeit, Maßhaltigkeit, Oberflächenglätte, Abrasionsstabilität und auch Farbgestaltung wird möglich.

Die Ultraschall-Frequenz liegt bevorzugt im Bereich 20 kHz bis 1 GHz, weiter bevorzugte Bereiche sind 20 kHz bis 1 MHz, besonders bevorzugt 20-100 kHz oder 20-60 kHz. Bevorzugt wird die Frequenz nicht variiert, sondern ist ein feststehender Wert.

Insbesondere bei Dentalmaterial liegen geeignete Füllstoffgehalte zwischen 40 und 85 Gew.-%, weiter vorzugsweise 50 und 85 Gew.-%, besonders bevorzugt 60 und 85 Gew.-%. Bevorzugt sind Teilchengrößen von kleiner 50 µm, weiter bevorzugt kleiner 25 µm. Bei den sogenannten Mikrofüllstoffen sind mittlere Teilchengrößen von 0,5-20 µm bevorzugt Bevorzugt werden als Mikrofüllstoffe die dem Fachmann geläufigen Dentalgläser verwendet. Beim Einsatz von Nanofüllstoffen liegt deren Primärteilchengröße bevorzugt zwischen 1 und 500 nm, weiter vorzugweise 1 und 300 nm. Bevorzugt werden hier Siliciumdioxid oder Mischoxide des Siliciumdioxid eingesetzt.

Die strukturviskosen Materialien weisen insbesondere zum Einsatz im Dentalbereich eine polymerisierbare Matrix aus Monomeren, Oligomeren, Präpolymeren und/oder Polymeren sowie geeigneten Additiven und Zusätzen auf, die dem Fachmann geläufig sind. Besonders bevorzugt enthält die polymerisierbare Matrix 60-90 Ma.-% BisGMA und/oder UDMA.

Beispielsweise benötigen vorzugsweise dentale Materialien zum Einsatz bei dentalen Restaurationen eine Biegefestigkeit von wenigstens 80, vorzugsweise wenigstens 100, weiter vorzugsweise wenigstens 120 MPa (nach ISO4049:2009(E)). Die Druckfestigkeit beträgt vorzugsweise mindestens 220, weiter vorzugweise mindestens 250, weiter vorzugsweise mindestens 290 MPa. Die genannten Werte beziehen sich auf das Dentalmaterial nach dessen Aushärtung.

Nachfolgend wird eine Vorrichtung zur Herstellung von Formkörpers aus einem strukturviskosen Material beschrieben, die im Rahmen des erfindungsgemäßen Verfahrens eingesetzt werden kann.

Diese Ausbringvorrichtung weist mindestens eine Sonotrode und/oder eine Düse auf, die zum Ausbringen des Materials ausgebildet ist.

Bevorzugt weist der Austrittskanal einer Düse einen sich zum Düsenaustritt hin verjüngen freien Querschnitt auf. Dies bedeutet, dass die freie Querschnittsfläche des Kanals quer zur Hauptfließrichtung im Bereich des Düsenaustritts geringer ist als in dem stromauf davor liegenden Bereich.

Im Fließweg des Materials in einer Düse vor oder im Bereich des Düsenaustritts ist eine Ultraschalleinrichtung angeordnet. Sie ist dazu ausgebildet, einen Randbereich von durch den Austrittskanal fließenden Materials zu beschallen.

Die Ultraschalleinrichtung ist so angeordnet und/oder wird so gesteuert oder geregelt, dass der Materialvorratsbehälter nicht oder jedenfalls nicht zur gleichen Zeit wie der Austrittskanal der Ausbringvorrichtung mit Ultraschall beaufschlagt wird.

Die Ausbringvorrichtung weist bevorzugt kein mechanisches Ventil auf. Dies bedeutet, dass zumindest im Bereich vor dem Düsenaustritt der Materialfluss nicht durch mechanische Elemente, Ventile oder dergleichen unterbrochen werden kann.

Es ist möglich, dass deutlich stromauf des Düsenaustritts, beispielsweise im Bereich einer Fördereinrichtung (wie beispielsweise einer Pumpe) für das Material ein mechanisches Ventil oder eine sonstige mechanische Sperrvorrichtung für den Materialfluss vorgesehen ist.

Es ist eine Steuereinrichtung vorgesehen, mittels der die Ultraschalleinrichtung als Durchflussschalter zum Ein- und Ausschalten des Materialflusses in einer Düse ansteuerbar ist.

Hochviskose Dispersionen lassen sich üblicherweise nur sehr langsam oder überhaupt nicht durch feine Düsen ausbringen, deren freier Querschnitt sich zum Düsenaustritt hin verjüngt.

Die strukturviskosen Eigenschaften eines auszubringenden Materials lassen sich nutzen, um den Materialfluss im Bereich des Düsenaustritts durch das Aufbringen von Ultraschall ohne jegliche mechanische Einrichtung, die zum Unterbrechen des Materialflusses die Düsenöffnung oder den Austrittskanal im Bereich der Düsenöffnung schließt oder deren freie Querschnittsfläche verringert, zu steuern. Es werden zum Steuern des Materialflusses die strukturviskosen Eigenschaften durch Aufbringen von Ultraschall genutzt. Ist die Ultraschalleinrichtung ausgeschaltet, reicht der Förderdruck der Fördereinrichtung nicht aus, um das strukturviskose Material durch den sich verjüngenden Querschnittsbereich vor der Düsenöffnung bzw. die Düsenöffnung austreten zu lassen.

Durch Beschallen des Randbereichs des Austrittskanals im Bereich der Düsenöffnung verringert sich die Viskosität des in diesem Bereich befindlichen strukturviskosen Materials in einem Maße, dass der Förderdruck ausreicht, um das Austreten aus der Düsenöffnung zu ermöglichen. Die Ultraschalleinrichtung hat somit die Funktion eines Schalters, der ohne mechanische Elemente und ohne Veränderung des freien Querschnitts den Materialfluss starten und stoppen kann.

Dentalmaterialien für dauerhafte dentale Restaurationen (beispielsweise Kronen und Brücken, Inlays oder Onlays) sind häufig keramische Materialien oder Komposite auf Harzbasis, die einen hohen Anteil Füllstoff enthalten. Im Stand der Technik lassen sich solche hoch gefüllten pastösen Stoffe nur dann durch eine Düse kontrolliert ausbringen, wenn der Materialfluss mittels eines mechanischen Ventils gesteuert wird. Ventile neigen jedoch dazu, durch die festen Füllstoffe des Materials verstopft zu werden. Die im Stand der Technik ebenfalls bekannte Alternative, ein Starten und Stoppen des Materialflusses durch Ein- und Ausschalten der Förderpumpe durchzuführen, hat den wesentlichen Nachteil, dass die sehr langsame Reaktion und ein Nachlaufen des geförderten Materials ein genau definiertes Ausbringen des Materials aus einer Düse erschwert bzw. unmöglich macht.

Die beschriebene Vorrichtung verzichtet vorzugsweise auf ein solches Ventil und weist im Austrittskanal eine konische Verjüngung hin zur Düsenöffnung auf, was zunächst widersinnig erscheint, da dies das Ausbringen des Materials weiter erschwert. Jedoch wird diese konische Verjüngung in Kombination mit der Ultraschalleinrichtung als Ventil ohne mechanische Elemente verwendet.

Die Vorrichtung nutzt die Eigenschaft eines strukturviskosen Materials, unter Einfluss von Scherung die Viskosität zu vermindern. Beschallung eines Randbereichs bedeutet, dass eine hinreichend dicke Schicht in der Randzone des Düsenkanals (Schichtdicke beispielsweise 10 µm) in der Viskosität so weit vermindert wird, dass der Pumpdruck bzw. Förderdruck ausreicht, das Material insgesamt durch den Düsenkanal zu fördern und aus der Düse austreten zu lassen. Die Amplitude des Ultraschall wird bevorzugt so gewählt, dass die Eindringtiefe des Ultraschalls in das im Düsenkanal befindliche Material in einer solchen Größenordnung liegt, dass bevorzugt lediglich diese Randzone beeinflusst und in ihrer Viskosität vermindert wird. Dabei ist es möglich, zu Beginn jedes Ausbringens für einen kurzen Zeitraum von beispielsweise 0,2-1 s die Amplitude des Ultraschalls höher zu wählen, als für das Austreten aus der Düse nötig wäre, um die anfängliche Thixotropie des Materials schneller zu überwinden oder die Fließgrenze des Materials schneller zu erreichen. Die Vorrichtung nutzt gezielt das strukturviskose Verhalten des Materials, um den Materialfluss zu steuern.

Die Ultraschalleinrichtung dient als diskreter An/Aus-Schalter, mittels der sich der Materialfluss ein- und ausschalten lässt. Die Ultraschalleinrichtung ist somit nicht lediglich ein Mittel, um den Durchfluss durch eine Düse zu erhöhen oder überhaupt erst zu ermöglichen, ihr wird vielmehr gezielt eine Ventilfunktion zugeordnet.

Dies schafft somit eine Vorrichtung, mit der Formkörper beispielsweise im Dentalbereich, bei der Herstellung von gedruckten Leiterbahnen, der Herstellung von elektromagnetischen Abschirmdichtungen oder dergleichen hergestellt werden können. Allen diesen Anwendungen ist gemeinsam, dass zur Herstellung entsprechender Formkörper pastöse Materialien mit einem hohen Füllungsgrad (hohen Anteil von darin dispergierten Festkörpern) verwendet werden, die durch Düsen des Standes der Technik nicht oder nur schwer ausgebracht werden können. Es hat sich gezeigt, dass hochgefüllte pastöse Stoffe (hochviskose Dispersionen) ohne unerwünschte Phasenseparation ausgebracht werden können. Phasenseparation tritt auf, wenn aufgrund des unterschiedlichen Fließverhaltens der Bestandteile einer Dispersion die flüssigen Bestandteile leichter bzw. schneller fließen und somit eine Separation von den Feststoffen auftritt.

Die Fördereinrichtung kann zur Aufrechterhaltung eines im Wesentlichen konstanten Förderdrucks ausgebildet sein unabhängig davon, ob der Materialfluss ein oder ausgeschaltet ist. Dabei ist es dann bevorzugt, wenn der Förderdruck so eingestellt ist oder so geregelt wird, dass er den Austrittsdruck des strukturviskosen Materials bei abgeschalteter Ultraschalleinrichtung unterschreitet und bei eingeschalteter Ultraschalleinrichtung überschreitet. Gewählt wird somit ein Förderdruck, der im Ruhezustand (ohne Ultraschall) nicht ausreicht, das strukturviskose Material durch den Düsenkanal und insbesondere nicht durch die sich konische verengende Austrittsöffnung zu treiben. Durch Einschalten des Ultraschalls und Beschallen des Randbereichs des Materials wird dessen Fließverhalten so verändert, dass der anstehende Förderdruck ausreicht, Material durch die Düsenöffnung fließen zu lassen. Wird beispielsweise eine zylindrische Kartusche, die strukturviskoses Material enthält, mittels einer Leitung mit einem Innendurchmesser von 2 mm verbunden mit einer Düse, deren Austrittsöffnungen einen Durchmesser von 100 µm aufweist, kann der Förderdruck im Inneren der Kartusche 3-5 bar betragen. Durch Druckverluste kann sich dann am Eingang der Düse (Ende der Leitung mit einem Innendurchmesser von 2 mm) ein Förderdruck im Bereich 2-3 bar einstellen.

Die freie Querschnittsfläche des Austrittskanals ist größer als die freie Querschnittsfläche der Düsenaustrittsöffnung. Bevorzugte Größenverhältnisse liegen im Bereich von 1:2 bis 1:1000, weiter bevorzugt 1:5 bis 1:500, besonders bevorzugt 1:10 bis 1:50.Die freie Querschnittsfläche der Düsenaustrittsöffnung kann bevorzugt zwischen 3.000 und 300.000 µm², weiter vorzugsweise 3.000 bis 100.000 µm², weiter vorzugsweise 3.000 bis 30.000 µm², weiter vorzugsweise 3.000 bis 10.000 µm² liegen.

Bei einem kreisförmigen Öffnungsquerschnitt der Düse entspricht dies einem Öffnungsdurchmesser im Bereich 60-600 µm, wobei Durchmesser unter 200 µm bevorzugt sind. Besonders bevorzugte Düsendurchmessers liegen zwischen 60 und 100 µm.

Die Vorrichtung kann weitere Materialvorratsbehälter und weitere Düsen (und Ausbringeinheiten u.s.w.) mit größeren als den bevorzugten Düsendurchmessern enthalten. Für einen schnellen Aufbau innenliegender Schichten oder Grundformen kann beispielsweise mit größeren Düsendurchmessern gearbeitet werden. Zur exakten Erstellung von Formkörpern oder Formkörperteilen in Bereich kleiner 200 µm oder von Außenkonturen von Grundformen kann dementsprechend ein kleinerer Düsendurchmesser gewählt werden. Für den Aufbau von Trägerkörpern kann bevorzugt ein weniger anspruchsvolles Material oder ein größerer Düsendurchmesser gewählt werden.

Die Ultraschalleinrichtung kann zur Beschallung eines Randbereichs einer Stärke von 5 bis 30 µm, vorzugsweise 5 bis 15 µm von im Austrittskanal befindlichen Materials ausgebildet sein. Ultraschall-Schwingungen werden in strukturviskosen Pasten, insbesondere mit einem hohen Füllstoffanteil, stark gedämpft.

Die Schwingungsamplitude nimmt somit mit zunehmender Eindringtiefe in das Material schnell ab. Insbesondere durch Einstellen der Amplitude kann man somit die Eindringtiefe beeinflussen. Zur Erzielung einer Eindringtiefe in den genannten Bereichen kann die Amplitude des Ultraschalls während eines Arbeitsvorgangs bzw. Durchflusses im Bereich 2-6 µm liegen. Es kann es bevorzugt sein, die Amplitude nach dem Einschalten des Ultraschalls für einen kurzen Zeitraum von bevorzugt 0,2-1 s etwas zu erhöhen, beispielsweise auf Werte von 9-12 µm. Diese anfänglich erhöhte Amplitude dient dazu, eine durch eine gewisse Trägheit bewirkte anfängliche Verzögerung des Austrags von Material so gering wie möglich zu halten, da der hohe Energieeintrag die Viskosität sehr schnell reduziert. Die Viskosität kann so sehr schnell auf etwa die Hälfte oder weniger reduziert werden.

Es ist bevorzugt, dass sich der Austrittskanal für das Material zum Düsenaustritt hin konisch verjüngt.

Der Konuswinkel kann bevorzugt 10 bis 170°, vorzugsweise 90 bis 170°, weiter vorzugsweise 95 bis 160° weiter 20 vorzugsweise 100 bis 140° betragen. Ein Konuswinkel von 120° ist besonders bevorzugt. In den bevorzugten Größenbereichen ist der Konuswinkel daher deutlich größer als bei üblichen, sich konische verjüngenden Düsenspitzen des Standes der Technik. Dort beträgt der Konuswinkel üblicherweise 45°. Der bevorzugt große Konuswinkel erzeugt einen hohen Staudruck, der insbesondere zu einem schnellen Stoppen des Materialstroms nach Abschalten des Ultraschalls beiträgt. Auch trägt der Konus zu der gewünschten Wirkung des Ultraschalls insbesondere in den Randbereichen bei, da der Eintrag des Ultraschalls bei der bevorzugt verwendeten, unten noch näher beschriebenen Sonotrode hauptsächlich in Längsrichtung der Düse erfolgt und der Ultraschall hauptsächlich im Bereich der konischen Verjüngung auf das Material wirkt.

Ein weiterer Aspekt ist die Kombination einer beschriebenen Vorrichtung mit einem strukturviskosen Material, das mittels dieser Vorrichtung ausgebracht werden kann. Im Rahmen dieser Kombination ist der Vorratsbehälter für das Material mit einem solchen strukturviskosen Material gefüllt.

Das Material weist bevorzugt einen festen Füllstoff auf, der in einer flüssigen Matrix dispergiert ist. Insbesondere im medizinischen Bereich wird hierunter eine Dispersion verstanden. Für solche Komposite ist ein gewisser Feststoffgehalt erforderlich, um brauchbare Prothesenmaterialien mit Eigenschaften herstellen zu können, die ihren Einsatz im medizinischen Bereich ermöglichen.

Ausführungsbeispiele der Erfindung werden nachfolgend anhand der Zeichnungen beschrieben.

Darin zeigen:
Fig. 1: Schematisch Ultraschalleinrichtung und Düse einer Vorrichtung zum Durchführen des erfindungsgemäßen Verfahrens;
Fig. 2: In einem Ausschnitt die Düsenspitze;

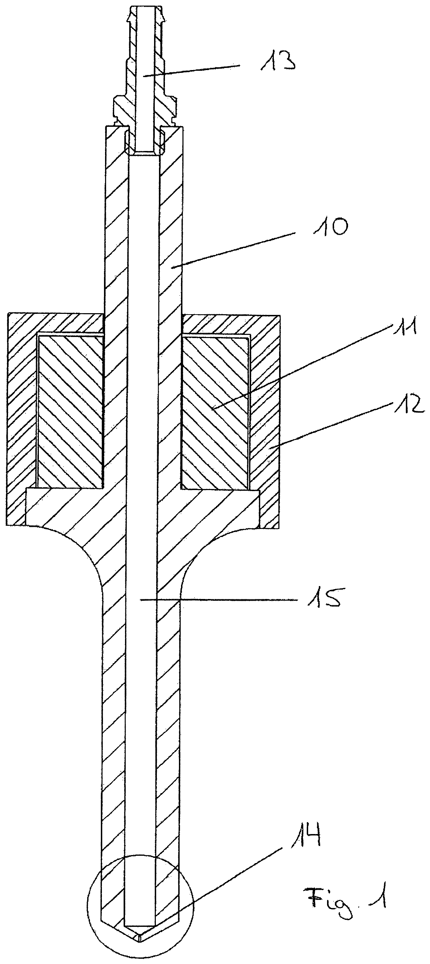

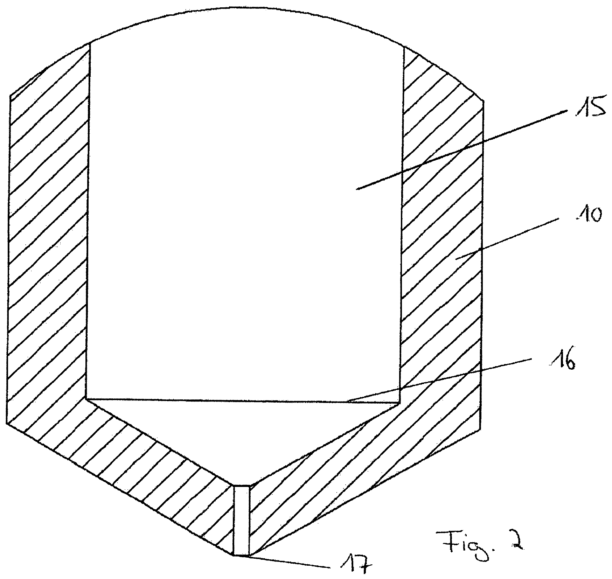

Die Ausbringvorrichtung 10 der Figur 1 weist bei 13a einen Zulauf für strukturviskoses Material aus einem Materialvorratsbehälter 13 auf. Dieses kann durch einen Austrittskanal 15 hin zu einer sich konische verjüngenden Düsenspitze 14 strömen. Im Ausschnitt der Figur 2 erkennt man, dass sich der Kanal 15 bei 16 beginnend konisch verjüngt hin zur Düsenspitze 17, die bei diesem Ausführungsbeispiel einen Öffnungsdurchmesser von 100 µm hat. Bei 12 ist die Ultraschalleinrichtung zu erkennen, die einen Piezo-Aktuator 11 aufweist. Durch Anlegen eines Wechselstroms an den Piezo-Aktuator 11 kann das im Kanal 15 und insbesondere im Bereich der Düsenspitze 14 befindliche Material mit Ultraschall beaufschlagt werden. Bei diesem Ausführungsbeispiel beträgt die Ultraschall-Frequenz 60 kHz und die Amplitude des Ultraschalls 6 µm (longitudinal in Fließrichtung des Materials). Der auf das im Kanal 15 befindliche Material wirkende Förderdruck ist so eingestellt, dass das Material diesen Kanal 15 zwar durchströmen kann, durch die konische Verjüngung zur Düsenspitze 17 hinjedoch an einem Ausströmen aus der Düsenspitze 17 gehindert wird, solange der Ultraschall nicht eingeschaltet ist. Wird eine Beaufschlagung mit Ultraschall durchgeführt, sinkt im Bereich der konischen Verjüngung 16 die Viskosität insbesondere im Randbereich des Materials so weit ab, dass es durch die Düsenspitze 17 hindurchtreten kann.

## Patentansprüche

1. Verfahren zur Herstellung eines Formkörpers bestehend aus einer Mehrzahl von Schichten aus einem strukturviskosen Material mittels einer Ausbringeinrichtung (10) für das strukturviskose Material, **gekennzeichnet durch** folgende Schritte:
a) Aufbringen einer Materialschicht auf einen Trägerkörper und/oder ein bereits aufgebrachte Materialschicht durch Führen der Ausbringeinrichtung (10) über diesen Trägerkörper,
b) Beaufschlagen dieser aufgebrachten Materialschicht mit Ultraschall,
c) Wiederholung der Schritte a) und b) zur Herstellung des gewünschten Formkörpers,
d) Aushärten des aufgebrachten Materials.

2. Verfahren nach Anspruch 1, **dadurch gekennzeichnet, dass** die Beaufschlagung der aufgebrachten Materialschicht mit Ultraschall mit einer an der Ausbringeinrichtung (10) angebrachten Ultraschalleinrichtung (12) erfolgt.

3. Verfahren nach Anspruch 1, **dadurch gekennzeichnet, dass** die Beaufschlagung der aufgebrachten Materialschicht mit Ultraschall mit einer von der Ausbringeinrichtung (10) getrennten, separaten Ultraschalleinrichtung erfolgt.

4. Verfahren nach einem der Ansprüche 1 bis 3, **dadurch gekennzeichnet, dass** die Vorschubgeschwindigkeit der Ausbringeinrichtung (10) beim Auftragen zwischen 5 und 10 mm/s beträgt.

5. Verfahren nach einem der Ansprüche 1 bis 4, **dadurch gekennzeichnet, dass** die Beaufschlagung mit Ultraschall mit einer Frequenz von 20 kHz bis 1 GHz, bevorzugt 20 kHz bis 1000 kHz, weiter vorzugsweise 20 bis 100 kHz erfolgt.

6. Verfahren nach einem der Ansprüche 1 bis 5, **dadurch gekennzeichnet, dass** die Beaufschlagung mit Ultraschall mit einer Amplitude von 1 bis 20 µm, bevorzugt 5 bis 15 µm, weiter vorzugsweise 9 bis 12 µm oder 2 bis 6 µm erfolgt.

7. Verfahren nach einem der Ansprüche 1 bis 6, **dadurch gekennzeichnet, dass** das strukturviskose Material einen Füllstoffgehalt von 40 bis 85 Gew.-% aufweist.

8. Verfahren nach einem der Ansprüche 1 bis 7, **dadurch gekennzeichnet, dass** das strukturviskose Material Füllstoffe mit einer Teilchengröße von 50 µm oder weniger aufweist.

## Claims

1. Method for producing a shaped product, consisiting of a plurality of layers, from a pseudoplastic material, using a dispensing device (10) for the pseudoplastic material, **characterized by** the following steps:
a) applying a layer of material to a carrier body and/or to an already applied layer of material by guiding the dispensing device (10) over this carrier body;
b) exposing this applied layer of material to ultrasound;
c) repeating steps a) and b) to produce the desired shaped product, and
d) curing the applied material.

2. Method as claimed in Claim 1, **characterized in that** the applied layer of material is exposed to ultrasound using an ultrasound device (12) mounted on the dispensing device (10).

3. Method as claimed in Claim 1, **characterized in that** the applied layer of material is exposed to ultrasound using an ultrasound device separate from the dispensing device (10).

4. Method as claimed in one of Claims 1 through 3, **characterized in that** the feed rate of the dispensing device (10) during the application is between 5 and 10 mm/s.

5. Method as claimed in one of Claims 1 through 4, **characterized in that** ultrasound is applied at a frequency of 20 kHz to 1 GHz, preferably 20 kHz to 1000 kHz, more preferably 20 to 100 kHz.

6. Method as claimed in one of Claims 1 through 5, **characterized in that** ultrasound is applied at an amplitude of 1 to 20 µm, preferably 5 to 15 µm, more preferably 9 to 12 µm or 2 to 6 µm.

7. Method as claimed in one of Claims 1 through 6, **characterized in that** the pseudoplastic material has a filler content of 40 to 85 percent by weight.

8. Method as claimed in one of Claims 1 through 7, **characterized in that** the pseudoplastic material has fillers with a particle size of 50 µm or less.

## Revendications

1. Procédé de fabrication d'un corps moulé composé d'une pluralité de couches à partir d'un matériau à viscosité structurelle au moyen d'un dispositif de distribution (10) pour le matériau à viscosité structurelle, **caractérisé par** les étapes suivantes :
a) application d'une couche de matériau sur un corps porteur et/ou une couche de matériau déjà appliquée par cheminement du dispositif de distribution (10) au-dessus de ce corps porteur,
b) exposition de cette couche de matériau appliquée aux ultrasons,
c) répétition des étapes a) et b) en vue de fabriquer le corps moulé souhaité,
d) durcissement du matériau appliqué.

2. Procédé selon la revendication 1, **caractérisé en ce que** l'exposition de la couche de matériau appliquée aux ultrasons s'effectue avec un dispositif ultrasonore (12) monté sur le dispositif de distribution (10).

3. Procédé selon la revendication 1, **caractérisé en ce que** l'exposition de la couche de matériau appliquée aux ultrasons s'effectue avec un dispositif ultrasonore séparé, isolé du dispositif de distribution (10).

4. Procédé selon l'une des revendications 1 à 3, **caractérisé en ce que** la vitesse d'avance du dispositif de distribution (10) lors de l'application est comprise entre 5 et 10 mm/s.

5. Procédé selon l'une des revendications 1 à 4, **caractérisé en ce que** l'exposition aux ultrasons s'effectue avec une fréquence de 20 kHz à 1 GHz, de préférence de 20 kHz à 1000 kHz, encore de préférence de 20 à 100 kHz.

6. Procédé selon l'une des revendications 1 à 5, **caractérisé en ce que** l'exposition aux ultrasons s'effectue avec une amplitude de 1 à 20 µm, de préférence de 5 à 15 µm, encore de préférence de 9 à 12 µm ou de 2 à 6 µm.

7. Procédé selon l'une des revendications 1 à 6, **caractérisé en ce que** le matériau à viscosité structurelle présente une teneur en matière de charge de 40 à 85 % massiques.

8. Procédé selon l'une des revendications 1 à 7, **caractérisé en ce que** le matériau à viscosité structurelle présente une matière de charge ayant une granulométrie inférieure ou égale à 50 µm.
